# EUROPEAN PATENT APPLICATION

(11) **EP 0 626 772 A2**
(43) Date of publication of application: **30.11.1994**
(21) Application number: 94201210.5
(22) Date of filing: 02.05.1994
(51) Int. Cl.: H04L 27/12

(54) **Frequency shift keying modulating circuit**

(30) Priority: 24.05.1993 US 65336
(71) Applicant: DELCO ELECTRONICS CORPORATION, Kokomo Indiana 46902 (US)
(72) Inventor: Anderson, Fred Jay, Lakeville, Ohio 44638 (US)
(74) Representative: Denton, Michael John

(57) **Abstract**

A frequency shift keying modulating circuit produces a first frequency according to a surface acoustic wave transducers (21) natural resonant frequency and a second frequency according to the surface acoustic wave transducer in combination with a reactive element (26). The frequency selected is determined by the state of a PIN switching diode (27) in parallel with the reactive element (26).

## Description

This invention relates to a frequency shift keying modulating unit for use, for example, in a low power transmitter used in a remote keyless entry, alarm or similar system for a motor vehicle.

A remote system for a motor vehicle has a base unit in a vehicle and a remote unit carried by the driver. The remote unit is typically of low power so as to be battery operated and quite small, designed about the size of a keyring fob. Such remote units are generally configured to transmit at least a stream of binary data utilising known radio frequency transmission modulation techniques. The most common technique utilised in this application is Amplitude Shift Keying (ASK). Experience has shown that ASK may exhibit performance limitations in certain radio frequency hostile environments resulting in reduced range and noise immunity.

One type of alternate radio frequency modulation technique which proves more robust than ASK is Frequency Shift Keying (hereinafter referred to as FSK) . Problems with prior art FSK circuitry are frequency drift and limited separation of generated carrier frequencies. Commonly employed varactor diode frequency pulling techniques yield less than the full frequency separation range possible, exhibit temperature instability characteristic of solid state electronics and require precise control of a reverse bias voltage applied thereto. Other techniques make use of a multiplicity of reactive element circuit paths for frequency pulling but likewise tend to be temperature drift sensitive and accomplish less than the full range of potential frequency separation. Multiple circuit paths and related switching circuitry reduce overall reliability and increase overall cost due to circuit complexity.

The present invention seeks to provide an improved FSK modulating circuit.

According to an aspect of the present invention, there is provided an FSK modulating circuit as specified in claim 1.

It is possible in some embodiments to provide a transmitter having improved noise immunity characteristics relative to ASK systems currently utilised in the art, and such a transmitter in a low cost and highly reliable manner using only a minimal number of components and minimal power so as to be applicable to a battery operated unit. It is also possible in some embodiments to provide a wide deviation in frequency between a first and second transmission frequency corresponding to binary data transmission in a FSK modulating transmitter.

A preferred embodiment provides a low-power requirement FSK modulating circuit which has an oscillator amplifier tuned for RF oscillation and responsive to an oscillatory input thereto. A Surface Acoustic Wave (SAW) transducer having a natural resonant frequency in a stand alone oscillatory configuration provides a first frequency for the FSK modulating circuit. A single reactive component located between the SAW transducer and the RF oscillator amplifier provides a pulling effect upon the SAW natural resonant frequency so as to change the oscillatory frequency input to the RF oscillator amplifier to a second frequency. A PIN switching diode in parallel with the reactive component provides a bypass of that reactive component such that the SAW transducer can provide its natural resonant frequency as an input to the RF oscillator amplifier. Means for forward and reverse biasing the PIN diode can provide selective control over these two independent frequencies.

An embodiment of the present invention is described below, by way of example only, with reference to the accompanying drawings, in which:
Figure 1 is a block diagram of an embodiment of FSK modulator; and
Figure 2 is a circuit diagram showing in more detail the embodiment of FSK modulator of Figure 1.

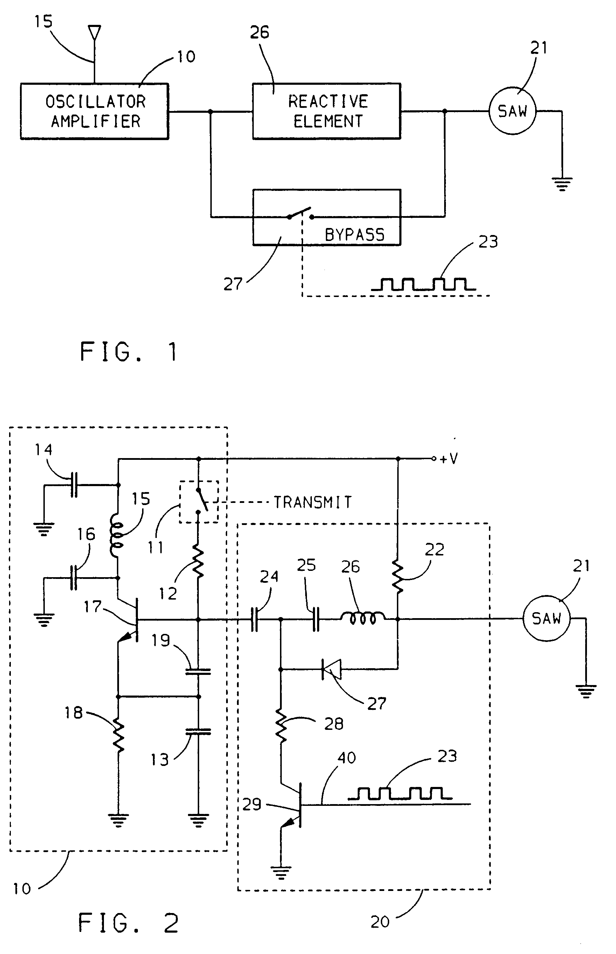

Referring to Figure 1, an RF oscillator amplifier 10 has an antenna 15 which has an operating oscillating frequency equal to that of RF oscillator amplifier 10. SAW transducer 21 is coupled to ground at one terminal thereof and has its output terminal coupled to one end of the parallel combination of reactive element 26 and bypass 27, illustrated as a switch. The other end of the parallel combination 26, 27 is coupled to the input of RF oscillator amplifier 10. Data stream 23 represents logic states controlling the state of bypass 27, in this example closing or opening the switch.

The circuit of Figure 1 includes the alternate arrangement of a reactive path to ground from RF oscillator amplifier 10 through a) the combination of reactive element 26 and SAW transducer 21 or b) directly through SAW transducer 21 via bypass 27, circumventing reactive element 26. The resultant output on antennae 15 has two distinct and independent frequencies, one for each logic state of data stream 23.

Figure 2 illustrates a preferred circuit for the modulator of Figure 1. Power (+V) and ground correspond to a low voltage DC power source. A single 3 volt watch battery or similar disc-like disposable battery is sufficient and preferred. RF oscillator amplifier 10 is preferably a Colpitts type oscillator, which has a broad oscillation range and therefore is able to match readily with SAW transducers which have natural oscillatory frequencies which tend to vary more widely than other oscillator elements. Colpitts oscillators are also relatively inexpensive due to use of capacitive elements as opposed to inductive elements in the oscillatory loop. The particular embodiment shown as RF oscillator amplifier 10 utilises a single transistor 17 to perform the multiple tasks of stable oscillatory switching and amplification sufficient to drive antenna 15 to a readily detectable output level. Antenna 15 is preferably a trace of metal patterned on a circuit board to provide a degree of inductance. In this embodiment, the inductance of antenna 15 is nominally 75nH. Antenna 15 is coupled at one end thereof to both the power terminal of the power supply and a first terminal of decoupling capacitor 14, and at the other end thereof to the collector of transistor 17. A second terminal of decoupling capacitor 14 is coupled to ground. Decoupling capacitor 14, nominally 270pF, decouples the generated RF signals from the power terminal of the battery during RF generation. Resistor 12, nominally 20 kΩ, is coupled in series with normally open switch 11 between the power terminal (V+) of the battery and the base of transistor 17 to provide bias for oscillator operation. Normally open switch 11 is closed when transmitting since at other times oscillation bias is not desirable and would unnecessarily reduce battery life. Other functionally equivalent means of providing bias voltage to the base of transistor 17 may include supplying a high logic level signal thereto when transmitting is initiated. Voltage dividing capacitors 13 and 19 are nominally 5.6 pF and 3.9pF respectively and capacitor 16 (used to control gain and amplitude peaking) is nominally between 1 and 5 pF. Antenna 15, capacitor 16, transistor 17, voltage divider configured capacitors 13, 19 form the oscillatory elements of RF oscillator amplifier 10 and, as specified, will support oscillation broadly centred around 300 MHz. A remaining low impedance signal path back from the base of transistor 17 to ground is provided and controlled externally of RF oscillator amplifier 10 by block 20 so as to establish the precise oscillation frequency.

Block 20 includes a pair of selectable low impedance signal paths from the base of transistor 17 to ground. A high logic level from data stream 23 on data line 40 causes transistor switch 29 to turn on, resulting in a forward biased PIN diode 27 through bias resistors 22 and 28. With PIN diode 27 conducting, inductor 26 is bypassed and the effective low impedance signal path is through SAW transducer 21. SAW transducer 21 has a natural stand-alone resonant frequency of nominally 300MHz, consistent with the Colpitts oscillator central frequency. Capacitor 24 is nominally 27 pF and provides for DC blocking but has no consequential effect upon the oscillatory loop.

A low logic level on data line 23 causes transistor switch 29 to turnoff resulting in a non-conducting PIN diode 27. With PIN diode 27 not conducting, inductor 26 in combination with SAW transducer is the effective low impedance signal path. Capacitor 25 is nominally 27 pF and just like capacitor 24 provides for DC blocking with no consequential effect upon the oscillatory loop. Biasing resistors 22 and 28, both nominally 430 ohms, provide sufficient biasing voltages for the circuit elements of block 20 with minimal power dissipation for extended battery life.

It is noted that in order to generate two distinct frequencies, only a single reactive component for frequency pulling need be employed. The SAW natural resonant frequency is utilised as one of the two frequencies while the other frequency is generated by the combination of the SAW transducer and the single reactive component. This arrangement allows for maximum spread between the two frequencies which in turn simplifies detection thereof and reduces difficulty in frequency discrimination. A greater amount of drift is thereby tolerable with such a design due to the relaxed detection accuracy required.

The disclosures in United States patent application no. 065,336, from which this application claims priority, and in the abstract accompanying this application are incorporated herein by reference.

## Claims

1. An FSK modulating circuit comprising a SAW transducer (21); an RF oscillator amplifier (10); a two-state frequency shifting circuit (26) including a reactive element (26) and a controlled shunt element (27) with open and closed states coupled in parallel to each other between the SAW transducer and the RF oscillator amplifier; and switch means (29) for controlling the state of the shunt element, wherein when the shunt element is open the reactive element is effective to cause oscillation at a first predetermined frequency and when the shunt element is closed the reactive element is bypassed to cause oscillation at a second predetermined frequency.

2. An FSK modulating circuit according to claim 1, wherein the reactive element is effective to pull the SAW natural resonant frequency to a predetermined pulled SAW frequency; the shunt element being a PIN switching diode (27); the switch means being responsive to a binary data signal for biasing the PIN switching diode open and closed; the SAW natural resonant frequency developed when the PIN switching diode is forward biased being the first predetermined frequency and the pulled SAW frequency developed when the PIN switching diode is reverse biased being the second predetermined frequency.

3. An FSK modulating circuit according to claim 1 or 2, wherein the RF oscillator amplifier comprises a Colpitts oscillator.

4. An FSK modulating circuit according to claim 1, 2 or 3, wherein the reactive element is an inductor.

5. An FSK modulating circuit according to claim 4, wherein the switch means (29) is a transistor switch including a base, an emitter and a collector; and wherein a first terminal of the inductor, an input port of the RF oscillator amplifier, a cathode of the shunt element and the collector of the transistor switch are coupled together; a second terminal of the inductor, an anode of the shunt element, an output port of the SAW transducer and a power terminal of a power source for the circuit are coupled together; and the emitter and a ground terminal of the power source are coupled together.

6. An FSK modulating circuit according to claim 5, wherein a high logic signal applied to the base of the transistor switch causes oscillation at a first frequency determined by the SAW transducer independent of the inductor and a low logic signal applied to the base of the transistor switch causes oscillation at a second frequency determined by the combination of the SAW transducer and the inductor.

7. An FSK modulating circuit according to any preceding claim, wherein the RF oscillator amplifier comprises an RF transmitter.
